# EUROPÄISCHE PATENTSCHRIFT

(11) **EP 4 230 885 B1**
(45) Veröffentlichungstag und Bekanntmachung des Hinweises auf die Patenterteilung: **08.04.2026**
(21) Anmeldenummer: 22157790.1
(22) Anmeldetag: 21.02.2022
(51) Int. Cl.: F16B 37/04, E03C 1/322, F16B 7/18, E03D 11/14

(54) **WANDANKER**
WALL ANCHOR
ANCRE MURAL

(43) Veröffentlichungstag der Anmeldung: 23.08.2023
(73) Patentinhaber: Geberit International AG, 8645 Jona (CH)
(72) Erfinder: LECHNER, Manuel, 8722 Kaltbrunn (CH); SPÄNI, Urs, 8832 Wollerau (CH)
(74) Vertreter: Frischknecht, Harry Ralph

(56) Entgegenhaltungen:
- EP-A1- 0 713 018
- DE-A1- 2 534 059
- DE-U1- 202004 005 819
- DE-U1- 202016 102 455
- DE-U1- 29 912 434
- DE-U1- 9 216 799
- FR-A1- 2 280 827
- GB-A- 653 534

## Beschreibung

### TECHNISCHES GEBIET

Die vorliegende Erfindung betrifft eine Anordnung mit dem Wandanker gemäss Anspruch 1.

### STAND DER TECHNIK

Aus dem Stand der Technik sind Montagerahmen zur Lagerung von Sanitärartikel bekannt geworden. Derartige Montagerahmen werden typischerweise mit einer Ankerschraube und einem Wandanker zu einer festen Tragstruktur, wie zu einer Gebäudewand, befestigt.

Die DE 299 16 234 U1 offenbart eine Schnellbefestigung, bei welcher eine C-Schiene an einer Wand befestigt wird. Ein Winkelträger wird dabei mit der C-Schiene über eine Schraubverbindung verbunden. Die Schraubverbindung muss mit einem Werkzeug fest angezogen werden.

Aus der DE 92 08 413 U1 ist eine zur DE 299 16 234 U1 sehr ähnliche Struktur bekannt geworden. Hier wird eine Hakenkopfschraube in die Profilschiene eingehängt. Die Hakenkopfschraube wird dabei mit einer Mutter und einer Unterlegscheibe gesichert.

Die oben genannten Befestigungskonzepte weisen den Nachteil auf, dass die Montage der Strukturen sehr aufwändig ist und für die Befestigung der Ankerschraube mehrere Elemente betätigt werden müssen.

Das Dokument DE 20 2016 102455 U zeigt eine Kombination aus einer Profilschiene und einem Mutternbauteil, dessen hakenförmige Federstege hinter einen Längsschlitz bildenden Wandvorsprung einschnappen.

### DARSTELLUNG DER ERFINDUNG

Ausgehend von diesem Stand der Technik liegt der Erfindung eine Aufgabe zugrunde, eine Anordnung mit einem Wandanker anzugeben, welcher die Nachteile des Standes der Technik überwindet. Insbesondere ist es eine bevorzugte Aufgabe, eine Anordnung mit einem Wandanker anzugeben, welche einfach und werkzeuglos montierbar ist.

Diese Aufgabe löst eine Anordnung nach Anspruch 1. Demgemäss umfasst ein Wandanker eine Ankerplatte mit einer Frontfläche und einer Rückfläche, einen von der Frontfläche der Ankerplatte abstehenden Befestigungsabschnitt, welcher sich entlang einer Mittelachse erstreckt, und welcher eine Gewindestruktur zur Aufnahme einer Ankerschraube aufweist, und zwei Haken, welche von der Rückfläche der Ankerplatte abstehen, wobei die Haken derart ausgebildet sind bzw. derart vorgesehen sind, dass der Wandanker mit Auskragungen einer Profilschiene bezüglich Kräften, die in Richtung der Mittelachse wirken, fest mit der Profilschiene verbindbar ist. Die Anordnung umfasst weiterhin eine Profilschiene. Die Profilschiene weist einen Grundschenkel und zwei vom Grundschenkel abstehende Seitenschenkel auf. Jeder der Seitenschenkel weist eine in den Bereich zwischen den beiden Seitenschenkel einragende Auskragung auf, in welche die genannten Haken einhaken.

Die Anordnung der Haken weist den Vorteil auf, dass eine Verbindung mit der Profilschiene bereitgestellt werden kann, welche ohne Zuhilfenahme eines Werkzeugs bereitgestellt werden kann. Der Wandanker kann somit einfach und trotzdem fest mit der Profilschiene verbunden werden.

Mit anderen Worten gesagt greifen die Haken derart an den Auskragungen der Profilschiene ein, so dass der Eingriff bei einer Krafteinwirkung in Richtung der Mittelachse fest bleibt. Es kommt demnach zu keiner Verschiebung zwischen Wandanker und Profilschiene. Die Krafteinwirkung kann dabei auf die Profilschiene hin, wie auch von der Profilschiene weg auf den Wandanker erfolgen.

Die beiden Haken sind beabstandet zueinander angeordnet, derart, dass die Haken an zwei unterschiedlichen Seiten der Profilschiene eingreifen.

Die beiden Haken weisen jeweils einen Hinterschnitt auf, wobei jeder Hinterschnitt eine Auskragung der Profilschiene aufnimmt.

Die Haken sind derart ausgebildet, dass die Auskragungen der Profilschiene durch die Haken umgriffen werden.

Vorzugsweise sind die Haken und die Auskragungen so ausgebildet, dass der Haken in Richtung der Profilachse der Profilschiene im mit der Profilschiene verbundenen Zustand, verschiebbar ist.

Erfindungsgemäss sind die Haken derart ausgebildet, dass der Wandanker über eine um die Mittelachse ausgeführte Schwenkbewegung mit den Haken in die Auskragungen einhakt. Hierdurch wird erreicht, dass der Haken ohne weitere Auslenkung quer zur Profilschiene montiert werden kann.

Vorzugsweise ist die Schwenkbewegung eine Schwenkbewegung um einen Winkel von 10° bis 45°.

Vorzugsweise sind die beiden Haken bezüglich der Mittelachse gegenüber einander angeordnet. Jeder der Haken weist dabei einen sich von der Rückfläche weg erstreckenden Hakengrund und einen sich dem Hakengrund anschliessenden und winklig geneigt zum Hakengrund wegerstreckenden Hakenabschnitt auf. Der Hakenabschnitt erstreckt sich vom Hakengrund bezüglich der Mittelachse gesehen nach aussen hin weg.

Der Hakengrund und der Hakenabschnitt definieren den oben genannten Hinterschnitt bzw. einen Aufnahmeraum für die Aufnahme der Auskragung der Profilschiene. Der Hinterschnitt bzw. Aufnahmeraum ist dabei nach aussen hin, das heisst von der Mittelachse weg, offen ausgebildet.

Vorzugsweise weist einer der Haken einen um die Mittelachse konvex gekrümmt ausgebildeten Hakengrund auf und der andere der Haken weist vorzugsweise einen als ebene Fläche ausgebildeten Hakengrund auf.

Bei der Schwenkbewegung kann der konvex gekrümmte Hakengrund auf der Auskragung abrollen.

Vorzugsweise weist mindestens einer der Haken eine Anschlagsfläche auf, welche im Wesentlichen rechtwinklig zur Mittelachse orientiert ist. Mit der Anschlagsfläche kann der Wandanker an einem Grundschenkel der Profilschiene, welcher zwischen den beiden Auskragungen liegt, anschlagen. Die Anschlagsfläche schliesst sich im Wesentlichen dem Hakenabschnitt an.

Besonders bevorzugt weise beide Haken je eine Anschlagsfläche auf, welche in einer gemeinsamen Ebene liegen, die sich rechtwinklig zur Mittelachse erstreckt.

Vorzugsweise ist zwischen den beiden Haken ein freier Zwischenraum angeordnet. Der freie Zwischenraum wird bei der Ankerplatte durch die Rückfläche begrenzt und seitlich durch die beiden Haken begrenzt. Der freie Zwischenraum hat den Vorteil, dass der Schraubenkopf einer Befestigungsschraube, mit welcher die Profilschiene an einer Tragstruktur befestigt wird, in den Zwischenraum einragen kann.

Vorzugsweise weist die Ankerplatte zwischen der Frontfläche und der Rückfläche eine Seitenfläche auf, wobei die Seitenfläche bei einem der Haken als Rundung ausgebildet ist und wobei die Seitenfläche beim anderen der Haken mit einem ersten Flächenabschnitt und einem zweiten Flächenabschnitt ausgebildet ist, wobei die beiden Flächenabschnitte ebene Flächen sind, die in einem Winkel winklig geneigt zueinander stehen.

Die Rundung und die beiden Flächenabschnitte erlauben die oben genannte Schwenkbewegung beim Einsetzen des Wandankers. Der Winkel zwischen den beiden ebenen Flächenabschnitten entspricht vorzugsweise dem Schwenkwinkel, um welchen der Wandanker bei der Montage an der Profilschiene verschwenkt wird.

Vorzugsweise liegen die Mittelachse und der Befestigungsabschnitt näher bei einem der beiden Haken als beim anderen Haken. Mit anderen Worten liegt der Befestigungsabschnitt asymmetrisch zwischen den beiden Haken.

Vorzugsweise weist die Ankerplatte einen Bereich auf, in welchem weder einer der beiden Haken noch der Befestigungsabschnitt liegt, derart, dass im besagten Bereich ein Durchgangsloch für die Durchführung einer Schraube einbringbar ist. Hierdurch ergeht der Vorteil, dass der Wandanker mit einer Schraube zur Tragstruktur befestigt werden kann. Das heisst, der Wandanker kann ohne die unten genannte Profilschiene eingesetzt werden, was die Einsatzmöglichkeiten erhöht.

Vorzugsweise weist der Befestigungsabschnitt von der Frontfläche bis zu seinem freien Ende eine Länge von 25 bis 100 Millimetern auf.

Vorzugsweise ist der Wandanker einstückig ausgebildet. Vorzugsweise ist der Wandanker aus Metall, insbesondere aus einem Zinkdruckguss. Der Wandanker kann aber auch aus Kunststoff, insbesondere aus einem faserverstärkten oder einem glasfaserverstärkten Kunststoff sein.

Die Auskragung erstreckt sich über die gesamte Länge der Profilschiene. Die Auskragung weist eine Form auf, welche der Form der Haken entsprechend ausgebildet ist, so dass der Haken die Auskragung aufnehmen kann. Die Innenform des Hakens entspricht im Wesentlichen der Aussenform der Auskragung.

Vorzugsweise ist der Grundschenkel im Wesentlichen flach ausgebildet und die Auskragung schliesst sich direkt dem Grundschenkel an. Der Seitenschenkel erstreckt sich von der Auskragung als flacher Schenkel, vorzugsweise in einem Winkel von 90° zum Grundschenkel.

Vorzugsweise weist der Grundschenkel eine Vielzahl von Durchbrüchen auf, durch welche eine Befestigungsschraube hindurchführbar ist, wobei der Schraubenkopf zwischen den beiden Auskragungen zu liegen kommt.

Vorzugsweise ragt der Befestigungsabschnitt aus dem Zwischenraum zwischen den beiden Seitenschenkeln hinaus. Der Befestigungsabschnitt erstreckt sich demnach aus dem Profil hinaus. Besonders bevorzugt liegt die Gewindestruktur im Wesentlichen ausserhalb des Innenraums.

Vorzugsweise kommt die Anschlagsfläche des mindestens einen Hakens mit dem Grundschenkel in Kontakt. Vorzugsweise wird eine Art Klemmwirkung bereitgestellt.

Vorzugsweise umfasst die Anordnung weiterhin eine Bodenschiene und ein Montagegestell. Die Bodenschiene weist einen Aufnahmeraum auf und wobei das Montagegestell kann mit mindestens einer Fussstütze in den Aufnahmeraum hineingestellt werden. Das Montagegestell ist gegenüber der Bodenschiene verschwenkbar, wobei am oberen Ende des Montagegestells mindestens eine Ankerschraube drehbar in einer Befestigungsöffnung im Montagegestell gelagert ist, wobei die Ankerschraube mit der Gewindestruktur im Eingriff steht. Vorzugsweise sind pro Montagerahmen zwei Ankerschrauben und zwei Wandanker angeordnet.

Das Montagegestell weist vorzugsweise Befestigungsstrukturen zur Befestigung von mindestens einem Sanitärartikel, wie eine Toilettenschüssel, ein Waschtisch, ein Urinal, ein Spülkasten, etc. auf.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Wandankers nach einer ersten Ausführungsform der vorliegenden Erfindung;
- Fig. 2: eine weitere perspektivische Ansicht des Wandankers nach Figur 1;
- Fig. 3: eine Rückansicht des Wandankers nach Figur 1;
- Fig. 4: eine Seitenansicht des Wandankers nach Figur 1;
- Fig. 5: eine perspektivische Ansicht einer Anordnung mit einem Wandanker nach den vorhergehenden Figuren und einer Profilschiene vor dem Einsetzen des Wandankers;
- Fig. 6: eine weitere nach Figur 5 mit teilweise eingesetztem Wandanker;
- Fig. 7: eine weitere nach Figur 5 mit teilweise eingesetztem Wandanker;
- Fig. 8: eine weitere nach Figur 5 mit vollständig eingesetztem Wandanker;
- Fig. 9: eine Seitenansicht nach Figur 8;
- Fig. 10: eine perspektivische Ansicht einer Weiterbildung der Anordnung nach den vorhergehenden Figuren 5 bis 9 mit einem Montagegestell während der Montage;
- Fig. 11: eine perspektivische Ansicht gemäss Figur 10 während der Montage; und
- Fig. 12: eine perspektivische Ansicht gemäss den Figuren 10 und 11 im montierten Zustand.

### BESCHREIBUNG BEVORZUGTER AUSFÜHRUNGSFORMEN

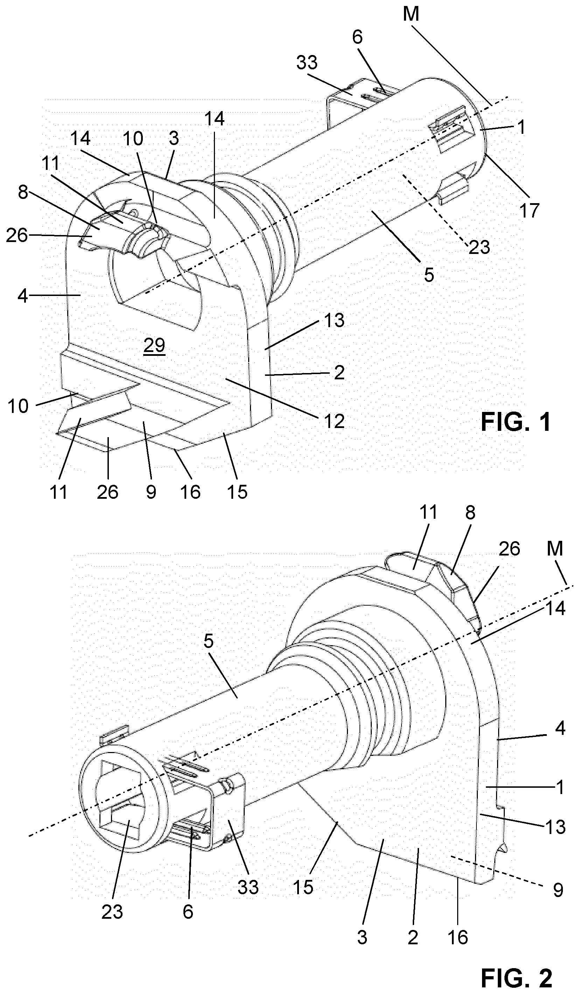

Die Figuren 1 bis 4 zeigen verschiedene Ansichten des erfindungsgemässen Wandankers 1. Der Wandanker 1 umfasst eine Ankerplatte 2, ein Befestigungsabschnitt 5 und zwei Haken 8, 9.

Die Ankerplatte 2 umfasst eine Frontfläche 3 und eine Rückfläche 4. Die Frontfläche 3 und die Rückfläche 4 sind mit einer Seitenfläche 13 verbunden.

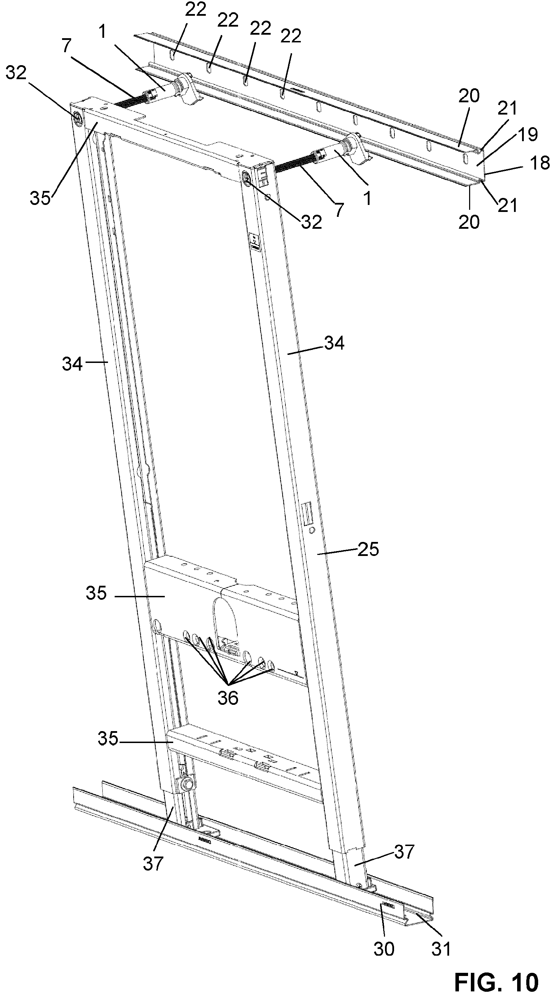

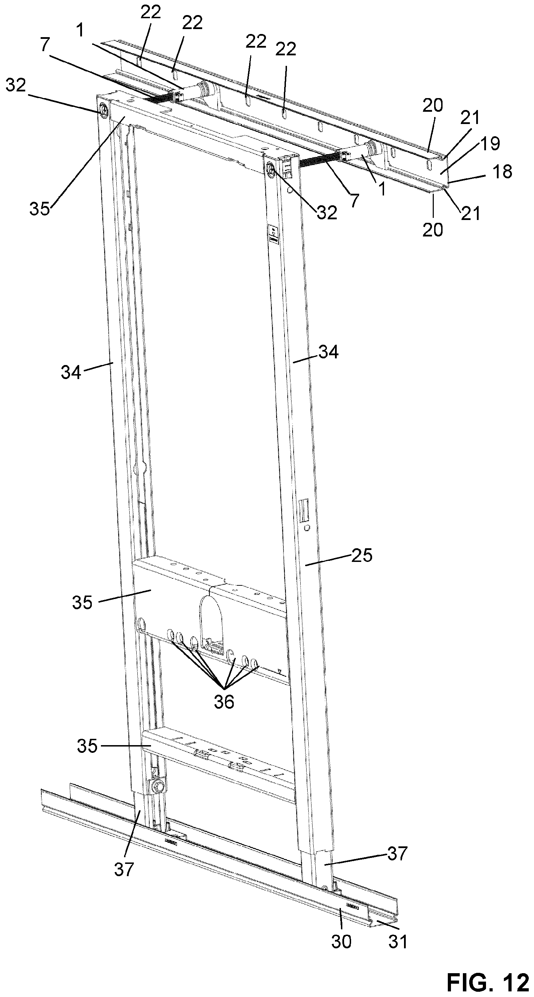

Von Frontfläche 3 steht der Befestigungsabschnitt 5 entlang einer Mittelachse M ab. Die Ankerplatte 2 und der Befestigungsabschnitt 5 sind dabei einteilig miteinander ausgebildet. Der Befestigungsabschnitt 5 weist in der gezeigten Ausführungsform die Form eines Zylinders auf. Eine Öffnung 23 erstreckt sich in Richtung der Mittelachse M durch den Befestigungsabschnitt. Die Öffnung 23 dient der Aufnahme einer Ankerschraube 7 mit der ein Montagegestell 25 zum Wandanker 1 befestigtbar ist. Die Ankerschraube 7 und das Montagegestell 25 werden in den Figuren 10 und 12 gezeigt.

Der Befestigungsabschnitt 5 weist weiterhin eine Gewindestruktur 6 auf, in welche die Ankerschraube 7 eingeschraubt werden kann. Die Gewindestruktur 6 ist hier Teil eines Bügelelements 33, welches radial zur Öffnung 23 die Öffnung 23 eingeschoben werden kann, sodass die Gewindestruktur 6 von einer Eingriffslage in eine Schnelleinstelllage bewegbar ist. In der Eingriffslage liegt die Gewindestruktur 6 derart in der Öffnung 23, dass die Ankerschraube 7 in die Gewindestruktur 6 eingeschraubt werden kann. In der Schnelleinstelllage liegt die Gewindestruktur 6 ausserhalb der Öffnung 23, derart, dass die Ankerschraube 7 relativ zur Öffnung 23 entlang einer Längsbewegung verschiebbar ist.

Die beiden Haken 8, 9 stehen, wie in den Figuren 1 bis 4 gezeigt, von der Rückfläche 4 der Ankerplatte 2 ab. Die beiden Haken 8, 9 sind derart ausgebildet, dass der Wandanker 1 mit Auskragungen 21 einer Profilschiene 19 verbindbar sind. Die Verbindung ist dabei derart, dass die Verbindung zwischen dem Wandanker 1 und der Profilschiene 18 bezüglich Kräften, die in Richtung der Mittelachse M wirken, fest ist. Im montierten Zustand steht der Wandanker 1 mit der Profilschiene 18 über deren Auskragungen 21 bezüglich Kräften in Richtung der Mittelachse M in fester Verbindung.

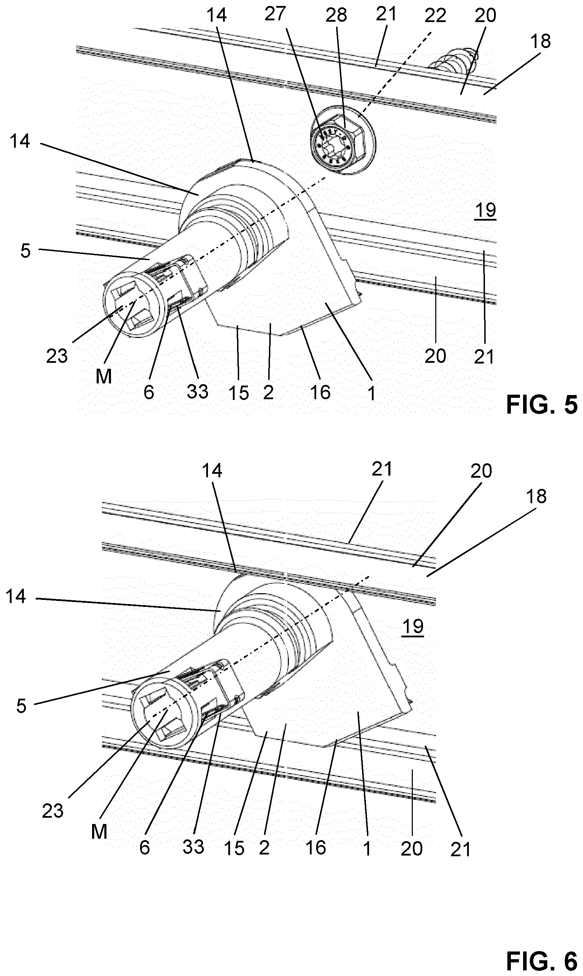

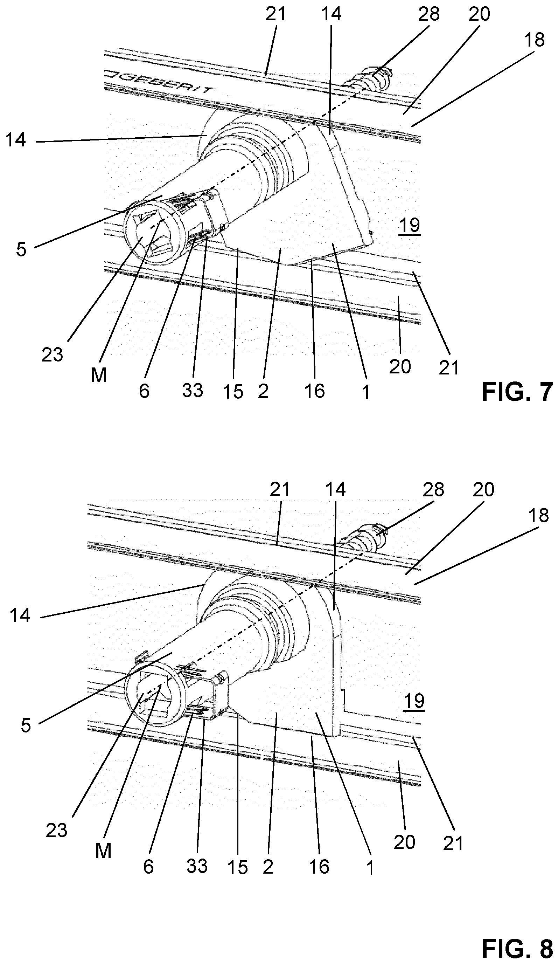

Die Haken 8, 9 sind derart ausgebildet, dass der Wandanker 1 über eine um die Mittelachse M ausgeführte Schwenkbewegung in die Profilschiene 18 einsetzbar ist. In den Figuren 5 bis 9 wird diese Schwenkbewegung genauer gezeigt. Der Wandanker 1 wird dabei in der Orientierung, wie in den Figuren 5 und 6 dargestellt, in die Profilschiene 18 eingesetzt. Anschliessen wird der Wandanker 1 um die Mittelachse M verschwenkt. In der Figur 7 wird eine Zwischenlage während der Verschwenkung gezeigt. In der Figur 8 wird der Wandanker 1 in der fertig montierten Lage gezeigt. In der montierten oder eingesetzten Lage umgreifen die Haken 8, 9 die Auskragung 21, so dass die oben beschriebene Verbindung erreicht werden kann.

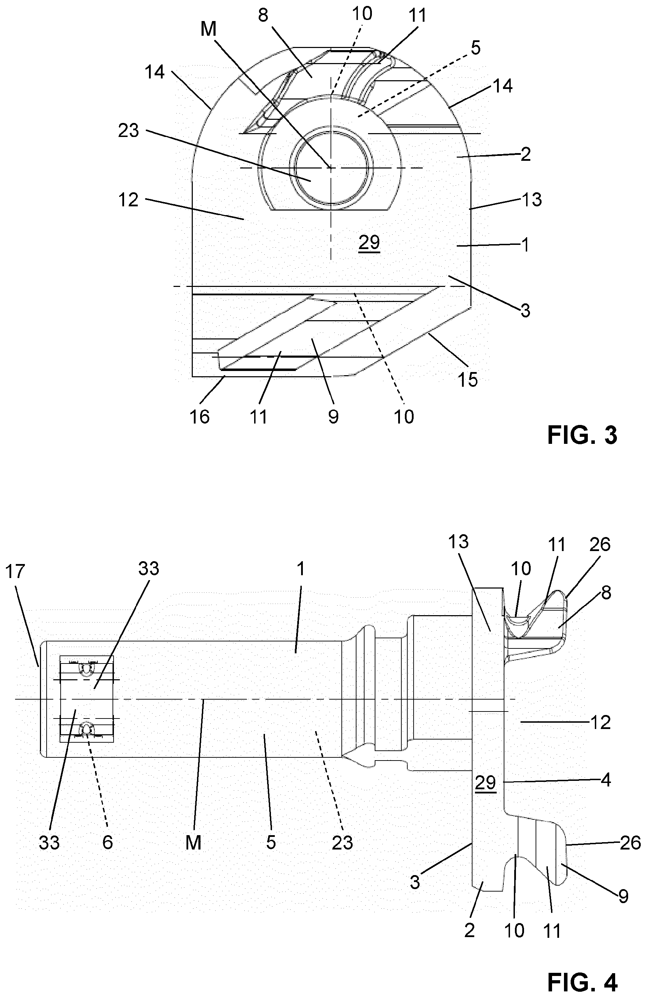

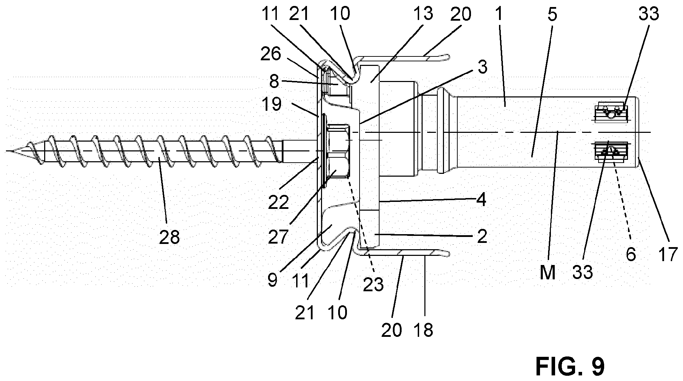

Von den Darstellungen gemäss der Figuren 4 und 9 wird nun die Form der beiden Haken 8, 9 erläutert. Die Haken 8, 9 sind bezüglich der Mittelachse M gegenüber einander angeordnet. Jeder der Haken 8, 9 weist einen sich von der Rückfläche 4 weg erstreckenden Hakengrund 10 auf. Vom Hakengrund 10 erstreckt sich ein Hakenabschnitt 11 in einem Winkel winklig geneigt zur Mittelachse M radial von der Mittelachse M nach aussen hin. Der Hakengrund 10 und der Hakenabschnitt 11 bilden jeweils einen Aufnahmeraum oder einen Hinterschnitt, welcher die Auskragung 21 aufnehmen.

Einer der beiden Haken, in den Figuren der Haken 8, weist einen um die Mittelachse konvex gekrümmt ausgebildeten Hakengrund 10 auf. Über diesen konvex gekrümmt ausgebildeten Hakengrund 10 wird die Schwenkbewegung, so wie oben anhand der Figuren 5 bis 8 erläutert, ausgeführt. Der andere der beiden Haken, in den Figuren der Haken 9, weist einen als ebene Fläche ausgebildeten Hakengrund 10 auf.

In der gezeigten Ausführungsform weisen beide Haken 8, 9 eine Anschlagsfläche 26 auf, welche im Wesentlichen rechtwinklig zur Mittelachse M orientiert ist. Mit der Anschlagsfläche 26 steht der Wandanker 1 auf einem Grundschenkel 19 der Profilschiene 18 auf.

Die Haken 8, 9 sind derart angeordnet, dass zwischen den beiden Haken 8, 9 ein freier Zwischenraum 12, welcher in den Figuren 4 und 9 ersichtlich ist, angeordnet ist. Dabei stehen die Haken 8, 9 beanstandet zueinander. Der freie Zwischenraum 12 weist den Vorteil auf, dass ein Schraubenkopf 27 einer Befestigungsschraube 28, mit welcher die Profilschiene 18 zu einer Tragstruktur befestigt wird, in den Zwischenraum 12 einragen kann. Mit anderen Worten heisst dies, dass der Wandanker 1 an der Profilschiene 18 unabhängig von der Positionierung der Befestigungsschraube 28 positioniert werden kann.

In der gezeigten Ausführungsform ist die Seitenfläche 13 beim Haken 8 aus Rundung ausgebildet. Vorzugsweise ist die Seitenfläche 13 bei dem Haken als Rundung ausgebildet, welcher den konvex gerundeten Hakengrund 10 aufweist. Die Seitenfläche 13 beim Haken 9 weist einen ersten Flächenabschnitt 15 und einen zweiten Flächenabschnitt 16 auf. Die beiden Flächenabschnitte 15, 16 sind als ebene Flächenabschnitte ausgebildet, die in einem Winkel winklig geneigt zueinander stehen. Beim Einsetzen des Wandankers 1 in die Profilschiene 18 verläuft der erste Flächenabschnitt 15 vor der Verschwenkung des Wandankers 1 parallel zu einem Seitenschenkel 20 der Profilschiene 18. Nach erfolgter Verschwenkung des Wandankers 1 verläuft der zweite Flächenabschnitt 16 parallel zum besagten Seitenschenkel 20.

Von den Seitenansichten der Figuren 4 und 9 kann weiter erkannt werden, dass der Befestigungsabschnitt 5 näher beim Haken 8 angeordnet ist als beim Haken 9.

Weiter weist die Ankerplatte 8 einen Bereich 29 auf, in welchem weder einer der beiden Haken 8, 9 noch der Befestigungsabschnitt 5 liegt. Dies ermöglicht einem Installateur im Bereich 29 ein Durchgangsloch vorzusehen, um mit einer in den Figuren nicht gezeigten Schraube den Wandanker 1 ohne die Profilschiene 18 zu befestigen.

Der Befestigungsabschnitt 5 weist von der Frontfläche 3 bis zu seinem freien Ende 17 eine Länge von 25 bis 100 Millimetern auf. In anderen Ausführungsformen kann der Befestigungsabschnitt 5 auch länger oder kürzer ausgebildet sein.

Eine Anordnung, so wie in den Figuren 5 bis 9 gezeigt, umfasst die Profilschiene 18 und mindestens einen Wandanker 1. Die Profilschiene 18 weist einen Grundschenkel 19 auf und zwei vom Grundschenkel 19 abstehende Seitenschenkel 20 auf. Jeder der Seitenschenkel 20 weist eine Auskragung 21 auf. Die Auskragung 21 ragt dabei in den Bereich zwischen den beiden Seitenschenkeln 20 ein.

Der Grundschenkel 19 ist im Wesentlichen flach ausgebildet und liegt in Einbaulage flächig auf der Tragstruktur auf. Der Grundschenkel 19 weist typischerweise eine Vielzahl von Durchbrüchen 22 auf. Die Durchbrüche 22 dienen jeweils der Aufnahme einer Befestigungsschraube 28, deren Schraubenkopf 29 zwischen den beiden Auskragungen 21 zu liegen kommt.

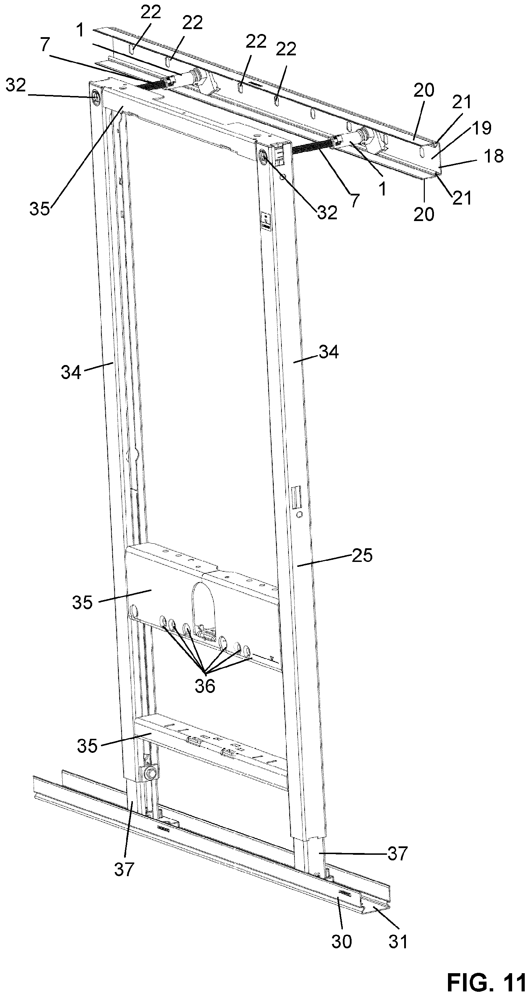

In den Figuren 10 bis 12 wird eine Weiterbildung der Anordnung gezeigt. Die Weiterbildung der Anordnung umfasst weiterhin eine Bodenschiene 30 und ein Montagegestell 25. Die Bodenschiene 30 weist einen Aufnahmeraum 31 auf und wird typischerweise auf einem Gebäudeboden fest montiert. Vorzugsweise ist die Bodenschiene 30 und die Profilschiene 18 identisch ausgebildet. Das Montagegestell 25 weist mindestens eine Fussstütze 32 auf. Das Montagegestell 25 wird mit ihrer mindestens einen Fussstütze 25 in den Aufnahmeraum 31 gestellt und wird dann über eine Schwenkbewegung zur Profilschiene 18 verschwenkt. Am oberen Ende weist das Montagegestell 25 mindestens eine Befestigungsöffnung 32 auf, in welche jeweils eine Ankerschraube 7 eingesetzt ist. Hier sind zwei Befestigungsöffnung 32 für zwei Ankerschrauben 7 vorgesehen. Die Ankerschraube 7 ist dabei mit einem Wandanker 1 gemäss obiger Beschreibung im Eingriff. Die Ankerschraube 7 steht dabei mit der Gewindestruktur 6 des Wandankers 1 im Eingriff. Während der Montage des Montagegestells 25 wird der mindestens eine Wandanker 1 gemeinsam mit dem Montagegestell 25 zur Profilschiene 18 hin verschwenkt. Die Schwenkachse des Montagegestells 25 liegt dabei in der Bodenschiene 30. Der mindestens eine Wandanker 1 wird dabei, wie in der Figur 6 gezeigt, über die Schwenkbewegung des Montagegestells 25 in die Profilschiene 18 hinein bewegt. Der mindestens eine Wandanker 1 kann dann mit der Profilschiene 18 über die oben beschriebene und in den Figuren 6 und 7 gezeigte Schwenkbewegung um die Mittelachse M verbunden werden.

In der gezeigten Ausführungsform fast das Montagegestell 25 zwei beanstandet zueinander liegende Vertikalstützen 34, welche über Traversen 35 in Verbindung stehen. Die Traversen 35 weisen Befestigungsstrukturen 36, wie Gewindeöffnungen oder dergleichen auf, an welchen ein Sanitärartikel befestigt werden kann.

### BEZUGSZEICHENLISTE

| | | | |
|---|---|---|---|
| 1 | Wandanker | 33 | Bügelelement |
| 2 | Ankerplatte | 34 | Vertikalstütze |
| 3 | Frontfläche | 35 | Traverse |
| 4 | Rückfläche | 36 | Befestigungsstruktur |
| 5 | Befestigungsabschnitt | 37 | Fussstütze |
| 6 | Gewindestruktur | M | Mittelachse |
| 7 | Ankerschraube | | |
| 8 | Haken | | |
| 9 | Haken | | |
| 10 | Hakengrund | | |
| 11 | Hakenabschnitt | | |
| 12 | freier Zwischenraum | | |
| 13 | Seitenfläche | | |
| 14 | Rundung | | |
| 15 | erster Flächenabschnitt | | |
| 16 | zweiter Flächenabschnitt | | |
| 17 | freies Ende | | |
| 18 | Profilschiene | | |
| 19 | Grundschenkel | | |
| 20 | Seitenschenkel | | |
| 21 | Auskragung | | |
| 22 | Durchbrüche | | |
| 23 | Öffnung | | |
| 25 | Montagegestell | | |
| 26 | Anschlagsfläche | | |
| 27 | Schraubenkopf | | |
| 28 | Befestigungsschraube | | |
| 29 | Bereich | | |
| 30 | Bodenschiene | | |
| 31 | Aufnahmeraum | | |
| 32 | Befestigungsöffnung | | |

## Patentansprüche

1. Anordnung umfassend einen Wandanker (1) und eine Profilschiene (18),
wobei der Wandanker (1) eine Ankerplatte (2) mit einer Frontfläche (3) und einer Rückfläche (4), einen von der Frontfläche (4) der Ankerplatte (2) abstehenden Befestigungsabschnitt (5), welcher sich entlang einer Mittelachse (M) erstreckt, und welcher eine Gewindestruktur (6) zur Aufnahme einer Ankerschraube (7) aufweist, und zwei Haken (8, 9), welche von der Rückfläche (4) der Ankerplatte (2) abstehen, umfasst,
wobei die Haken (8, 9) derart ausgebildet sind, dass der Wandanker (1) mit Auskragungen (21) einer Profilschiene (18) bezüglich in Richtung der Mittelachse (M) wirkenden Kräften fest mit der Profilschiene (18) verbindbar ist, und
wobei die Profilschiene (18) einen Grundschenkel (19) und zwei vom Grundschenkel (19) abstehende Seitenschenkel (20) aufweist, wobei jeder der Seitenschenkel (20) eine in den Bereich zwischen den beiden Seitenschenkel (20) einragende Auskragung (21) aufweist, und
wobei die Haken (8, 9) derart ausgebildet sind, dass der Wandanker (1) über eine um die Mittelachse (M) ausgeführte Schwenkbewegung mit den Haken (8, 9) in die Auskragungen (21) einhakt.

2. Anordnung nach Anspruch 1, **dadurch gekennzeichnet, dass** die zwei Haken (8, 9) bezüglich der Mittelachse (M) gegenüber einander angeordnet sind, wobei jeder der Haken (8, 9) einen sich von der Rückfläche (4) weg erstreckenden Hakengrund (10) und einen sich dem Hakengrund (10) anschliessenden und winklig geneigt zum Hakengrund (10) wegerstreckenden Hakenabschnitt (11) aufweisen, wobei sich der Hakenabschnitt (11) vom Hakengrund (10) bezüglich der Mittelachse (M) gesehen nach aussen hin wegerstrecken.

3. Anordnung nach einem der vorhergehenden Ansprüche, **dadurch gekennzeichnet, dass** einer der Haken (8) einen um die Mittelachse (M) konvex gekrümmt ausgebildeten Hakengrund (10) aufweist und dass der andere der Haken (9) vorzugsweise einen als ebene Fläche ausgebildeten Hakengrund (10) aufweist.

4. Anordnung nach einem der vorhergehenden Ansprüche, **dadurch gekennzeichnet, dass** mindestens einer der Haken (8, 9) eine Anschlagsfläche (26) aufweist, welche im Wesentlichen rechtwinklig zur Mittelachse (M) orientiert ist.

5. Anordnung nach einem der vorhergehenden Ansprüche, **dadurch gekennzeichnet, dass** zwischen den beiden Haken (8, 9) ein freier Zwischenraum (12) angeordnet ist.

6. Anordnung nach einem der vorhergehenden Ansprüche, **dadurch gekennzeichnet, dass** die Ankerplatte (2) zwischen der Frontfläche (3) und der Rückfläche (4) eine Seitenfläche (13) aufweist, wobei die Seitenfläche (13) bei einem der Haken (8, 9) als Rundung (14) ausgebildet ist und wobei die Seitenfläche (13) beim anderen der Haken (8, 9) mit einen ersten Flächenabschnitt (15) und einem zweiten Flächenabschnitt (16) ausgebildet ist, wobei die beiden Flächenabschnitte (15, 16) ebene Flächen sind, die in einem Winkel winklig geneigt zueinander stehen.

7. Anordnung nach einem der vorhergehenden Ansprüche, **dadurch gekennzeichnet, dass** die Mittelachse (M) und der Befestigungsabschnitt (5) näher bei einem der beiden Haken (8, 9) liegt als beim anderen Haken (9, 8); und/oder dass die Ankerplatte (8) einen Bereich (29) aufweist, in welchem weder einer der beiden Haken (8, 9) noch der Befestigungsabschnitt (5) liegt, derart, dass im besagten Bereich ein Durchgangsloch für die Durchführung eine Schraube einbringbar ist.

8. Anordnung nach einem der vorhergehenden Ansprüche, **dadurch gekennzeichnet, dass** der Befestigungsabschnitt (5) von der Frontfläche (3) bis zu seinem freien Ende (17) eine Länge von 25 bis 100 Millimetern aufweist; und/oder dass der Wandanker (1) einstückig ausgebildet ist; und/oder dass der Wandanker (1) aus Metall, insbesondere aus einem Zinkdruckguss, oder aus Kunststoff, insbesondere aus faserverstärkten oder glasfaserverstärkten Kunststoff, ist.

9. Anordnung nach einem der vorhergehenden Ansprüche, **dadurch gekennzeichnet, dass** der Grundschenkel (19) im Wesentlichen flach ausgebildet ist und dass sich die Auskragung (19) direkt dem Grundschenkel (19) anschliesst und der Seitenschenkel (20) von der Auskragung als flacher Schenkel, vorzugsweise in einem Winkel von 90° zum Grundschenkel (19), absteht.

10. Anordnung nach einem der vorhergehenden Ansprüche, **dadurch gekennzeichnet, dass** der Grundschenkel (19) eine Vielzahl von Durchbrüchen (22) aufweist, durch welche eine Befestigungsschraube (28) hindurchführbar ist, wobei der Schraubenkopf (29) der Befestigungsschraube (28) zwischen den beiden Auskragungen (21) zu liegen kommt.

11. Anordnung nach einem der vorhergehenden Ansprüche, **dadurch gekennzeichnet, dass** der Befestigungsabschnitt (5) aus dem Zwischenraum zwischen den beiden Seitenschenkeln (20) weg ragt.

12. Anordnung nach einem der vorhergehenden Ansprüche, **dadurch gekennzeichnet, dass** die Anschlagsfläche (26) des mindestens einen Hakens (8, 9) mit dem Grundschenkel (19) in Kontakt kommt.

13. Anordnung nach einem der vorhergehenden Ansprüche, **dadurch gekennzeichnet, dass** die Anordnung weiterhin eine Bodenschiene (30) und ein Montagegestell (25) umfasst, wobei die Bodenschiene (30) einen Aufnahmeraum (31) aufweist und wobei das Montagegestell (25) mit mindestens einer Fussstütze (37) in den Aufnahmeraum (31) hinein gestellt werden kann und gegenüber der Bodenschiene (30) verschwenkbar ist, wobei am oberen Ende des Montagegestells (25) mindestens eine Ankerschraube (7) drehbar in einer Befestigungsöffnung (32) im Montagegestell (25) gelagert ist, wobei die Ankerschraube (7) mit der Gewindestruktur (6) am Befestigungsabschnitt (5) des Wandankers (1) im Eingriff steht.

## Claims

1. Arrangement comprising a wall anchor (1) and a profile rail (18),
wherein the wall anchor (1) has an anchor plate (2) with a front surface (3) and a rear surface (4), a fastening section (5) projecting from the front surface (4) of the anchor plate (2), which extends along a central axis (M) and which has a threaded structure (6) for receiving an anchor screw (7), and two hooks (8, 9) projecting from the rear surface (4) of the anchor plate (2),
wherein the hooks (8, 9) are designed such that the wall anchor (1) can be firmly connected to the profile rail (18) with projections (21) of a profile rail (18) with respect to forces acting in the direction of the central axis (M), and
wherein the profile rail (18) has a base leg (19) and two side legs (20) projecting from the base leg (19), wherein each of the side legs (20) has a projection (21) projecting into the area between the two side legs (20), and
wherein the hooks (8, 9) are designed such that the wall anchor (1) hooks into the projections (21) via a pivoting movement about the central axis (M) with the hooks (8, 9).

2. Arrangement according to claim 1, **characterised in that** the two hooks (8, 9) are arranged opposite each other with respect to the central axis (M), wherein each of the hooks (8, 9) has a hook base (10) extending from the rear surface (4) and a hook section (11) adjoining the hook base (10) and extending away from the hook base (10) at an angle, wherein the hook section (11) extends outwards from the hook base (10) as seen in relation to the central axis (M).

3. Arrangement according to one of the preceding claims, **characterised in that** one of the hooks (8) has a hook base (10) curved convexly about the central axis (M) and that the other hook (9) preferably has a hook base (10) designed as a flat surface.

4. Arrangement according to one of the preceding claims, **characterised in that** at least one of the hooks (8, 9) has a stop surface (26) which is oriented substantially at right angles to the central axis (M).

5. Arrangement according to one of the preceding claims, **characterised in that** a free space (12) is arranged between the two hooks (8, 9).

6. Arrangement according to one of the preceding claims, **characterised in that** the anchor plate (2) has a side surface (13) between the front surface (3) and the rear surface (4), wherein the side surface (13) is formed as a curve (14) on one of the hooks (8, 9) and the side surface (13) of the other hook (8, 9) comprises a first surface section (15) and a second surface section (16), the two surface sections (15, 16) being flat surfaces that are angled relative to each other.

7. Arrangement according to one of the preceding claims, **characterised in that** the central axis (M) and the fastening section (5) are closer to one of the two hooks (8, 9) than to the other hook (9, 8); and/or that the anchor plate (8) has an area (29) in which neither one of the two hooks (8, 9) nor the fastening section (5) is located, such that a through hole for the passage of a screw can be inserted in said area.

8. Arrangement according to one of the preceding claims, **characterised in that** the fastening section (5) has a length of 25 to 100 millimetres from the front surface (3) to its free end (17); and/or that the wall anchor (1) is formed in one piece; and/or that the wall anchor (1) is made of metal, in particular die-cast zinc, or plastic, in particular fibre-reinforced or glass fibre-reinforced plastic.

9. Arrangement according to one of the preceding claims, **characterised in that** the base leg (19) is essentially flat and that the projection (19) is directly connected to the base leg (19) and the side leg (20) protrudes from the projection as a flat leg, preferably at an angle of 90° to the base leg (19).

10. Arrangement according to one of the preceding claims, **characterised in that** the base leg (19) has a plurality of openings (22) through which a fastening screw (28) can be passed, with the screw head (29) of the fastening screw (28) being positioned between the two projections (21).

11. Arrangement according to one of the preceding claims, **characterised in that** the fastening section (5) protrudes from the space between the two side legs (20).

12. Arrangement according to one of the preceding claims, **characterised in that** the stop surface (26) of the at least one hook (8, 9) comes into contact with the base leg (19).

13. Arrangement according to one of the preceding claims, **characterised in that** the arrangement further comprises a floor rail (30) and a mounting frame (25), wherein the floor rail (30) has a receiving space (31) and wherein the mounting frame (25) can be placed with at least one footrest (37) can be placed into the receiving space (31) and can be pivoted relative to the floor rail (30), wherein at least one anchor screw (7) is rotatably mounted in a fastening opening (32) in the mounting frame (25), wherein the anchor screw (7) engages with the threaded structure (6) on the fastening section (5) of the wall anchor (1).

## Revendications

1. Dispositif comprenant un ancrage mural (1) et un rail profilé (18),
l'ancrage mural (1) comportant une plaque d'ancrage (2) avec une surface avant (3) et une surface arrière (4), une partie de fixation (5) s'étendant à partir de la surface avant (4) de la plaque d'ancrage (2), qui s'étend le long d'un axe central (M) et qui présente une structure filetée (6) pour recevoir une vis d'ancrage (7), et deux crochets (8, 9) qui dépassent de la surface arrière (4) de la plaque d'ancrage (2),
les crochets (8, 9) étant conçus de telle sorte que l'ancrage mural (1) puisse être relié solidement au rail profilé (18) à l'aide de saillies (21) d'un rail profilé (18) par rapport aux forces agissant dans la direction de l'axe central (M), et
le rail profilé (18) comportant une branche de base (19) et deux branches latérales (20) dépassant de la branche de base (19), chacune des branches latérales (20) comportant une saillie (21) s'étendant dans la zone entre les deux branches latérales (20), et
les crochets (8, 9) étant conçus de telle sorte que l'ancrage mural (1) s'accroche dans les saillies (21) avec les crochets (8, 9) par un mouvement de pivotement autour de l'axe central (M).

2. Dispositif selon la revendication 1, **caractérisé en ce que** les deux crochets (8, 9) sont disposés l'un en face de l'autre par rapport à l'axe central (M), chacun des crochets (8, 9) comportant une base de crochet (10) s'étendant à partir de la surface arrière (4) et une partie de crochet (11) qui se raccorde à la base du crochet (10) et s'étend en formant un angle avec la base du crochet (10), la partie de crochet (11) s'étendant vers l'extérieur par rapport à la base de crochet (10) vu par rapport à l'axe central (M).

3. Dispositif selon l'une quelconque des revendications précédentes, **caractérisé en ce que** l'un des crochets (8) présente une base de crochet (10) courbée de manière convexe autour de l'axe central (M) et **en ce que** l'autre crochet (9) présente de préférence une base de crochet (10) conçue comme une surface plane.

4. Dispositif selon l'une quelconque des revendications précédentes, **caractérisé en ce qu'**au moins l'un des crochets (8, 9) présente une surface d'arrêt (26) qui est orientée essentiellement à angle droit par rapport à l'axe central (M).

5. Dispositif selon l'une quelconque des revendications précédentes, **caractérisé en ce qu'**un espace libre (12) est prévu entre les deux crochets (8, 9).

6. Dispositif selon l'une quelconque des revendications précédentes, **caractérisé en ce que** la plaque d'ancrage (2) présente une surface latérale (13) entre la surface avant (3) et la surface arrière (4), la surface latérale (13) vers l'un des crochets (8, 9) étant formée comme un arrondi et la surface latérale (13) vers l'autre des crochets (8, 9) étant formée avec une première partie de surface (15) et une deuxième partie de surface (16), les deux parties de surface (15, 16) étant des surfaces planes qui forment un angle incliné l'une par rapport à l'autre.

7. Dispositif selon l'une quelconque des revendications précédentes, **caractérisé en ce que** l'axe central (M) et la partie de fixation (5) sont plus proches de l'un des deux crochets (8, 9) que de l'autre crochet (9, 8) ; et/ou **en ce que** la plaque d'ancrage (8) présente une zone (29) dans laquelle ni l'un des deux crochets (8, 9) ni la partie de fixation (5) ne se trouvent, de telle sorte qu'un trou traversant pour le passage d'une vis puisse être réalisé dans ladite zone.

8. Dispositif selon l'une quelconque des revendications précédentes, **caractérisé en ce que** la partie de fixation (5) présente une longueur de 25 à 100 millimètres entre la surface frontale (3) et son extrémité libre (17) ; et/ou **en ce que** l'ancrage mural (1) est réalisée d'un seul tenant ; et/ou que l'ancrage mural (1) est en métal, en particulier en zinc moulé sous pression, ou en plastique, en particulier en plastique renforcé de fibres ou de fibres de verre.

9. Dispositif selon l'une quelconque des revendications précédentes, **caractérisé en ce que** la branche de base (19) est essentiellement plate et **en ce que** la saillie (21) est directement raccordée à la branche de base (19) et la branche latérale (20) dépasse de la saillie sous forme de branche plate, de préférence à un angle de 90° par rapport à la branche de base (19).

10. Dispositif selon l'une quelconque des revendications précédentes, **caractérisé en ce que** la branche de base (19) présente une pluralité d'ouvertures (22) à travers lesquelles peut passer une vis de fixation (28), la tête (29) de la vis de fixation (28) venant se loger entre les deux saillies (21).

11. Dispositif selon l'une quelconque des revendications précédentes, **caractérisé en ce que** la partie de fixation (5) dépasse de l'espace entre les deux branches latérales (20).

12. Dispositif selon l'une quelconque des revendications précédentes, **caractérisé en ce que** la surface d'appui (26) de l'au moins un crochet (8, 9) entre en contact avec la branche de base (19).

13. Dispositif selon l'une quelconque des revendications précédentes, **caractérisé en ce que** le dispositif comprend en outre un rail au sol (30) et un cadre de montage (25), le rail au sol (30) présentant un espace de réception (31) et le cadre de montage (25) pouvant être placé avec au moins un repose-pieds (37) dans l'espace de réception (31) et pouvant être pivoter par rapport au rail au sol (30), au moins une vis d'ancrage (7) étant montée de manière rotative dans une ouverture de fixation (32) vers l'extrémité supérieure du cadre de montage (25), la vis d'ancrage (7) étant en prise avec la structure filetée (6) sur la partie de fixation (5) de l'ancrage mural (1).
